Europäisches Patentamt

European Patent Office

Office européen des brevets

(19)

(11) EP 0 932 261 A1

(12) ## DEMANDE DE BREVET EUROPEEN

(43) Date de publication:
28.07.1999 Bulletin 1999/30

(51) Int Cl.⁶: **H04B 1/52**, H01P 1/217

(21) Numéro de dépôt: 99400113.9

(22) Date de dépôt: 19.01.1999

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **19.01.1998 FR 9800490**

(71) Demandeur: **Société Française d'Engineering et de Représentation - S.O.F.R.E.R.**
**92000 Nanterre (FR)**

(72) Inventeur: **Thepot, Stéphane**
**92250 La Garenne Colombes (FR)**

(74) Mandataire: **Doireau, Marc et al**
**Cabinet Orès**
**6, avenue de Messine**
**75008 Paris (FR)**

(54) ### Multiplexeur-demultiplexeur pour deux bandes hautes fréquences

(57)    Multiplexeur-démultiplexeur pour deux bandes hautes fréquences, comprenant deux filtres passe-bande ($F_1$,$F_2$) respectivement reliés à deux dispositifs émetteur-récepteur ($E_1$-$R_1$/$E_2$-$R_2$) et réunis l'un à l'autre par un dispositif de couplage commun (10) qui est relié à un support ou canal de transmission (A) tel qu'une antenne par exemple, caractérisé en ce que le dispositif de couplage commun (10) aux deux filtres ($F_1$, $F_2$) est constitué par une ligne d'injection en court-circuit (Ri) non accordable en fréquence.

L'invention s'applique notamment aux bandes de fréquences GSM (880 MHz-960 MHz) et DCS (1710 MHz-1880 MHz) utilisées pour les radio-téléphones mobiles.

FIG.3

## Description

La présente Invention concerne un multiplexeur-démultiplexeur pour deux bandes hautes fréquences.

D'une manière générale, un système de multiplexage permet de réunir sur un même support ou canal de transmission, tel qu'un câble, une antenne,..., des signaux de fréquences différentes.

Les solutions technologiques pour réaliser un système de multiplexage sont notamment choisies en fonction des puissances à transmettre, des écarts duplex entre les fréquences, des largeurs des bandes passantes, des isolations entre les accès d'entrée, des pertes,....

A l'heure actuelle, on distingue trois grandes classes de systèmes de multiplexage, à savoir : en pont, à ligne de déphasage et à point commun, ce dernier étant le plus couramment utilisé.

A titre d'exemple, un système de multiplexage à point commun peut être constitué de deux filtres passe-bande et de deux liaisons coaxiales reliant les deux filtres à un point commun. Chaque filtre est également relié à un dispositif émetteur-récepteur, et le point commun des deux filtres est relié à une antenne émettrice-réceptrice, par exemple.

Dans ce type de système de multiplexage, la liaison coaxiale reliant chaque filtre à leur point commun doit avoir une certaine longueur de manière à ramener une impédance infinie à ce point commun aux fréquences considérées.

Plus précisément, les liaisons coaxiales des deux filtres doivent avoir des longueurs $L_1$ et $L_2$ telles que :

$$L_1 \approx n_1 \frac{\lambda(F2)}{k1} \text{ et } L_2 \approx n_2 \frac{\lambda(F1)}{k2}$$

où :

- $n_1$ et $n_2$ sont des nombres entiers impairs ;
- $\lambda(F_2)$ est la longueur d'onde correspondant à la fréquence centrale du filtre $F_2$ ;
- $\lambda(F_1)$ est la longueur d'onde correspondant à la fréquence centrale du filtre $F_1$ ;
- $k_1$ est le nombre ayant la valeur 4 si le couplage de sortie du premier filtre $F_1$ est selfique ou la valeur 2 si ledit couplage est capacitif ;
- $k_2$ est le nombre ayant la valeur 4 si le couplage de sortie du second filtre $F_2$ est selfique ou la valeur 2 si ledit couplage est capacitif ;

Un tel système de multiplexage est relativement simple, peu onéreux et fonctionne d'une manière globalement correcte. Cependant, compte tenu de la sélectivité propre des lignes coaxiales $L_1$ et $L_2$, si les bandes passantes $F_1$ et $F_2$ sont importantes, alors il devient difficile voire même impossible d'adapter les accès d'entrée des filtres aux extrémités de leurs bandes.

Pour s'affranchir des problèmes posés par les liaisons coaxiales $L_1$ et $L_2$, on connaît du document US-A-2 241 693 un multiplexeur-démultiplexeur associé à un système de commutation d'antenne où ces liaisons L1 et L2 sont supprimées, ce qui revient à un système dit à point commun sans point commun. Les deux filtres qui composent ce multiplexeur-démultiplexeur sont couplés par un résonateur commun qui est accordable en fréquence d'une part, et qui est relié au système d'antenne par un couplage électrique d'autre part.

Cependant, du fait que le résonateur commun aux deux filtres est accordé en fréquence, cela implique que l'écart duplex ou écart entre les fréquences centrales des deux filtres, d'une part, et que leurs bandes passantes respectives, d'autre part, sont faibles.

Le but de l'invention est de perfectionner un tel multiplexeur-démultiplexeur pour pouvoir l'utiliser avec des bandes passantes quelconques, en particulier des bandes éloignées l'une de l'autre.

A cet effet, l'invention propose un multiplexeur-démultiplexeur pour deux bandes hautes fréquences, comprenant deux filtres passe-bande respectivement reliés à deux dispositifs émetteur-récepteur et réunis l'un à l'autre par un dispositif de couplage commun qui est relié à un support ou canal de transmission tel qu'une antenne par exemple, multiplexeur-démultiplexeur qui est caractérisé en ce que le dispositif de couplage commun aux deux filtres est constitué par une ligne d'injection en court-circuit non accordable en fréquence

Cette ligne d'injection est constituée par un injecteur communément appelé résonateur d'injection bien que n'étant pas accordable en fréquence.

D'une manière générale, chaque filtre basse bande comprend une succession de résonateurs accordables en fréquence et montés parallèlement entre eux et à la ligne d'injection en court-circuit, cette dernière asurant un couplage avec le premier résonateur adjacent de chaque filtre.

De cette manière, les deux filtres passe-bande sont totalement indépendants l'un de l'autre.

Selon une application de l'invention aux radio-téléphones mobiles, les deux bandes hautes fréquences sont de l'ordre de 880 MHz-960 MHz ou bande GSM (Global System Communication) et 1710 MHz-1880 MHz ou bande DCS (Digital Communication System), respectivement.

D'une manière générale, les deux filtres peuvent être réalisés avec une technologie de type coaxiale, interdigité à air ou à ligne triplaque "stripline", ou en peigne "combline" à air ou à ligne triplaque.

Dans le cas de la technologie "combline" ou en peigne, le premier filtre passe-bande comprend m résonateurs, un injecteur relié à l'émetteur-récepteur associé à la première bande de fréquences, et le second filtre passe-bande comprend n résonateurs, un injecteur relié à l'émetteur-récepteur associé à la seconde bande de fréquences, et le résonateur d'injection commun avec le premier filtre.

Le perfectionnement apporté par l'invention permet ainsi de simplifier la structure du multiplexeur-démultiplexeur et de réduire son encombrement pour arriver à une intégration maximale, tout en améliorant les performances.

Un multiplexeur-démultiplexeur selon l'invention permet ainsi de multiplexer des fréquences dont les écarts duplex peuvent être très différents ou éloignés, et d'associer des filtres dont les bandes passantes peuvent être très larges.

D'autres caractéristiques, avantages et détails de l'invention ressortiront du complément de description qui va suivre en référence aux dessins annexés, donnés uniquement à titre d'exemple et dans lesquels :

- la figure 1 illustre schématiquement un système de multiplexage à point commun selon l'Art antérieur évoqué en préambule,
- la figure 2 illustre un exemple de réalisation du système de multiplexage de la figure 1, et
- la figure 3 illustre un exemple de réalisation d'un système de multiplexage selon l'invention.

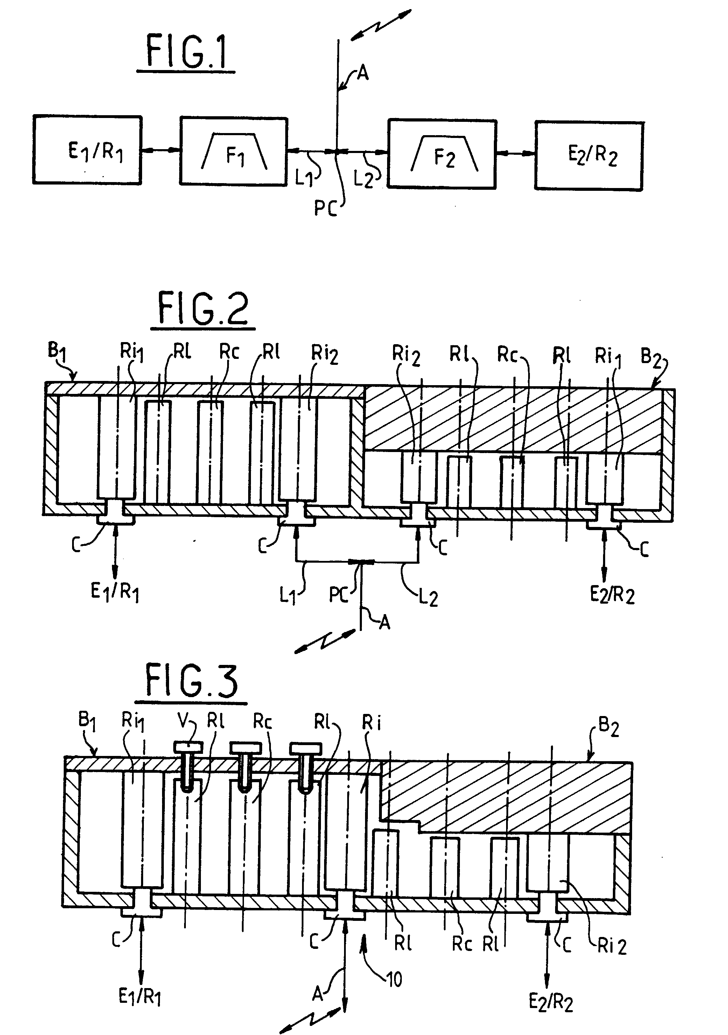

Le système de multiplexage à point commun tel qu'évoqué en préambule et illustré sur la figure 1, comprend deux filtres passe-bande $F_1$ et $F_2$, et deux liaisons coaxiales $L_1$ et $L_2$ qui relient les deux filtres $F_1$ et $F_2$ à un point commun PC. Les deux filtres $F_1$ et $F_2$ sont également respectivement reliés à deux dispositifs émetteur-récepteur $E_1/R_1$ et $E_2/R_2$. Le point PC commun aux deux filtres $F_1$ et $F_2$ est relié à un canal de transmission tel qu'une antenne A.

Si on considère les deux bandes de fréquences de l'ordre de 880 MHz-960 MHz ou bande GSM d'une part et 1710 MHz-1880 MHz ou bande DCS d'autre part, qui sont utilisées par les radio-téléphones mobiles, les liaisons coaxiales $L_1$ et $L_2$ ont des longueurs de l'ordre de 40mm et 80mm en prenant des fréquences centrales égales à 900 MHz et 1800 MHz.

Dans l'exemple de réalisation illustré à la figure 2 pour les deux bandes de fréquences GSM et DCS, les deux filtres passe-bande $F_1$ et $F_2$ sont juxtaposés et réalisés dans une technologie "combline" ou en peigne.

Le filtre $F_1$ associé à la bande de fréquences GSM comprend plusieurs résonateurs successifs montés parallèlement les uns aux autres et logés à l'intérieur d'un boiter métallique $B_1$ de forme rectangulaire. Plus précisément, le filtre $F_1$ comprend un résonateur central Rc, deux résonateurs latéraux Rl et deux résonateurs d'injection Ri1 et Ri2 situés de part et d'autre des deux résonateurs latéraux Rl. Le résonateur d'injection $Ri_1$ est relié par une ligne coaxiale au dispositif émetteur-récepteur $E_1/R_1$ pour recevoir ou transmettre la bande de fréquence GSM. L'autre résonateur d'injection $Ri_2$ est relié au point commun Pc pour recevoir ou transmettre la bande de fréquence GSM au moyen de la ligne

coaxiale $L_1$ d'une longueur de l'ordre de 40mm qui inclut la longueur du résonateur d'injection $Ri_2$.

Les résonateurs du filtre $F_1$ sont des éléments tubulaires métalliques creux qui s'étendent sur une longueur de l'ordre de 41mm, le résonateur central Rc ayant un diamètre de l'ordre de 11mm, les résonateurs latéraux Rl ayant un diamètre de l'ordre de 9,5mm. Les résonateurs d'injection $Ri_1$ et $Ri_2$ sont pleins, ont un diamètre de l'ordre de 15mm et ne sont pas accordables en fréquence. Les deux résonateurs latéraux Rl sont séparés du résonateur central Rc d'une distance de l'ordre de 12mm, alors que les résonateurs d'injection $Ri_1$ et $Ri_2$ sont séparés des résonateurs latéraux Rl d'une distance de l'ordre de 3,5mm. Enfin, les deux résonateurs d'injection $Ri_1$ et $Ri_2$ sont séparés des parois adjacentes du boîtier $B_1$ d'une distance de l'ordre de 15mm.

D'une manière similaire, le filtre $F_2$ associé à la bande de fréquences DCS comprend un succession de résonateurs logés à l'intérieur d'un boîtier métallique $B_2$ de forme rectangulaire. Plus précisément, le filtre $F_2$ comprend un résonateur central Rc, deux résonateurs latéraux Rl et deux résonateurs d'injection $Ri_1$ et $Ri_2$ situés de part et d'autre des deux résonateurs latéraux Rl.

Le résonateur d'injection $Ri_1$ est relié par une ligne coaxiale au dispositif émetteur-récepteur $E_2/R_2$ pour recevoir ou transmettre la bande de fréquence DCS. Le résonateur d'injection $Ri_2$ est relié au point commun Pc pour recevoir ou transmettre la bande de fréquences DCS au moyen de la ligne coaxiale $L_2$ d'une longueur de l'ordre de 80mm qui inclut la longueur du résonateur d'injection $Ri_2$.

Les résonateurs du filtre $F_2$ sont des éléments tubulaires métalliques creux qui s'étendent sur une longueur de l'ordre de 21mm, le résonateur central Rc ayant un diamètre de l'ordre de 10mm, les résonateurs latéraux ayant un diamètre de l'ordre de 9mm. Les résonateurs d'injection $Ri_1$ et $Ri_2$ sont pleins et ont un diamètre de l'ordre de 15mm et ne sont pas accordables en fréquence. Les deux résonateurs latéraux Rl sont séparés du résonateur central Rc d'une distance de l'ordre de 11,5mm, alors que les résonateurs d'injection $Ri_1$ et $Ri_2$ sont séparés des résonateurs latéraux Rl d'une distance de l'ordre de 3,2mm.

D'une manière générale, les deux boîtiers $B_1$ et $B_2$ ne forment qu'un seul boîtier qui s'étend sur une longueur de l'ordre de 253mm pour les bandes de fréquences GSM et DCS considérées.

Ainsi, dans ce mode de réalisation selon l'Art antérieur, l'énergie électromagnétique qui est captée par l'antenne A est dérivée à partir d'un point commun Pc vers'les deux filtres $F_1$ et $F_2$.au moyen des deux liaisons $L_1$ et $L_2$.

Le mode de réalisation qui est illustré sur la figure 3, reprend celui de la figure 2 mais en le modifiant selon le perfectionnement de l'invention.

Plus précisément, les lignes coaxiales $L_1$ et $L_2$ ainsi que le point commun Pc reliant ces lignes à l'antenne A sont supprimés, et les deux filtres $F_1,F_2$ sont

réunis l'un à l'autre par un dispositif de couplage commun 10 qui est relié à l'antenne A.

Le dispositif de couplage 10 est constitué par une ligne d'injection en court-circuit ou injecteur commun Ri aux deux filtres $F_1$ et $F_2$, assurant un couplage avec le premier résonateur latéral Rl de chaque filtre $F_1$ et $F_2$, cet injecteur commun Ri n'étant pas accordable en fréquence.

Selon un mode préférentiel de réalisation, le filtre passe-bande $F_1$ associé à la bande de fréquences GSM n'est pas modifié par rapport au filtre $F_1$ illustré sur la figure 2, et le résonateur d'injection $Ri_2$ est remplacé par un injecteur Ri commun aux deux filtres $F_1$ et $F_2$.

Par contre, la seule modification qui intervient au niveau du filtre $F_2$ réside dans la distance qui sépare l'injecteur commun Ri et le premier résonateur latéral Rl, cette distance n'étant plus de l'ordre de 3,2mm mais de l'ordre de 2,5mm.

Avantageusement, les deux boîtiers $B_1$ et $B_2$ ne forment qu'un seul boîtier dans lequel sont intégrés les deux filtres $F_1$ et $F_2$, et la longueur de ce boîtier est ramenée à une longueur de l'ordre de 200mm au lieu de 253mm comme dans le cas de la figure 2.

Enfin, on notera sur la figure 3 que le résonateur d'injection $Ri_1$ de chaque filtre $F_1$ et $F_2$ est relié au dispositif émetteur-récepteur associé par un connecteur coaxial C, que le résonateur d'injection commun Ri est également relié à l'antenne A par un connecteur coaxial C, et que les résonateurs Rc et Rl de chaque filtre $F_1$ et $F_2$ sont associés à un élément de réglage en fréquence de type capacitif qui est constitué par une vis V vissée dans le boîtier et dont la tige s'engage plus ou moins à l'intérieur du résonateur.

Ainsi, l'énergie électromagnétique captée par l'antenne A n'est plus dérivée à partir d'un point commun Pc et des lignes coaxiales $L_1$ et $L_2$ vers les filtres $F_1$ et $F_2$, mais est directement injectée par le résonateur d'injection commun Ri dans les filtres $F_1$ et $F_2$ par induction électromagnétique.

D'une manière générale, l'invention ne se limite pas au mode de réalisation illustré sur la figure 3 où les filtres $F_1$ et $F_2$ comprennent trois résonateurs (m = n = 3).

Selon un autre mode de réalisation envisagé pour les mêmes bandes de fréquences GSM et DCS, le filtre $F_1$ (GSM) reste inchangé mais le filtre $F_2$ (DCS) peut comprendre cinq résonateurs avec trois résonateurs centraux et deux résonateurs latéraux. Les résonateurs centraux ont un diamètre de l'ordre de 11,5mm et sont séparés l'un de l'autre d'une distance de l'ordre de 17,5mm. Le résonateur latéral situé du côté de l'émetteur-récepteur $E_2/R_2$ a un diamètre de l'ordre de 9,6mm et est séparé du premier résonateur central adjacent d'une distance de l'ordre de 13mm et du résonateur d'injection $Ri_2$ d'une distance de l'ordre de 3,6mm. Le résonateur latéral situé du côté de l'antenne A s'étend sur une longueur de l'ordre de 25mm, a un diamètre de l'ordre de 9,6mm et est séparé du premier résonateur central adjacent d'une distance de l'ordre de 13mm et du résonateur d'injection commun Ri d'une distance de l'ordre de 2,6mm.

En outre, on peut appliquer l'invention à d'autres bandes de fréquences que celles envisagées précédemment, sachant que les deux bandes de fréquences ne doivent pas être de préférence trop proches l'une de l'autre mais pas trop éloignées l'une de l'autre. Enfin, le multiplexeur-démultiplexeur selon l'invention peut être réalisé à partir d'autres technologies que celle du "combline", comme cela a déjà été précisé en préambule.

## Revendications

1. Multiplexeur-démultiplexeur pour deux bandes hautes fréquences, comprenant deux filtres passe-bande ($F_1$,$F_2$) respectivement reliés à deux dispositifs émetteur-récepteur ($E_1$-$R_1$/$E_2$-$R_2$) et réunis l'un à l'autre par un dispositif de couplage commun (10) qui est relié à un support ou canal de transmission (A) tel qu'une antenne par exemple, caractérisé en ce que le dispositif de couplage commun (10) aux deux filtres ($F_1$,$F_2$) est constitué par une ligne d'injection en court-circuit (Ri) non accordable en fréquence.

2. Multiplexeur-démultiplexeur selon la revendication 1, caractérisé en ce que chaque filtre passe-bande ($F_1$,$F_2$) comprend une succession de résonateurs parallèles entre eux et à la ligne d'injection en court-circuit (Ri), cette dernière assurant un couplage avec le premier résonateur adjacent de chaque filtre ($F_1$,$F_2$) de sorte que les deux filtres sont indépendants l'un de l'autre

3. Multiplexeur-démultiplexeur selon la revendication 1 ou 2, caractérisé en ce que les deux bandes hautes fréquences sont de l'ordre de 880 MHz-960 MHz ou bande GSM et 1710 MHz-1880 MHz ou bande DCS, respectivement.

4. Multiplexeur-démultiplexeur selon la revendication 3, caractérisé en ce que les deux filtres ($F_1$, $F_2$) sont réalisés avec une technologie de type coaxiale.

5. Multiplexeur-démultiplexeur selon la revendication 3, caractérisé en ce que les deux filtres ($F_1$, $F_2$) sont réalisés avec une technologie de type interdigité à air ou à ligne triplaque "stripline".

6. Multiplexeur-démultiplexeur selon la revendication 3, caractérisé en ce que les deux filtres ($F_1$,$F_2$) sont réalisés avec une technologie "combline" ou en peigne à air ou à ligne triplaque "stripline".

7. Multiplexeur-démultiplexeur selon la revendication 6, caractérisé en ce que le filtre passe-bande (F$_1$) comprend m résonateurs (Rc,Rl), un résonateur d'injection (Ri$_1$) relié à l'émetteur-récepteur (E$_1$-R$_1$) associé à la bande de fréquences GSM et le résonateur d'injection (Ri) commun avec le filtre (F$_2$), et en ce que le filtre passe-bande (F$_2$) comprend n résonateurs (Rc,Rl), un résonateur d'injection (Ri$_1$) relié à l'émetteur-récepteur (E$_2$-R$_2$) associé à la bande de fréquences DCS, et le résonateur d'injection (Ri) commun avec le filtre (F$_1$).

8. Multiplexeur-démultiplexeur selon la revendication 7, caractérisé en ce que le résonateur d'injection (Ri) commun aux deux filtres (F$_1$,F$_2$) est un élément tubulaire plein qui s'étend sur une longueur de l'ordre de 40 mm et a un diamètre de l'ordre de 15mm.

9. Multiplexeur-démultiplexeur selon la revendication 7 ou 8, caractérisé en ce que le filtre (F$_1$) comprend trois résonateurs creux (Rl,Rc,Rl) séparés d'une distance de l'ordre de 11,8mm, et en ce que le résonateur (Rl) du filtre (F$_1$) qui est adjacent au résonateur d'injection commun (Ri) est un élément tubulaire qui s'étend sur une longueur de l'ordre de 40mm, a un diamètre de l'ordre de 9,5mm et est séparé du résonateur d'injection commun d'une distance de l'ordre de 2,5mm.

10. Multiplexeur-démultiplexeur selon l'une quelconque des revendications 7 à 9, caractérisé en ce que le filtre (F$_2$) comprend trois résonateurs creux (Rl, Rc,Rl) séparés d'une distance de l'ordre de 11,5mm, et en ce que le résonateur (Rl) du filtre (F$_2$) qui est adjacent au résonateur d'injection commun (Ri) est un élément tubulaire qui s'étend sur une longueur de l'ordre de 21mm, a un diamètre de l'ordre de 9mm et est séparé du résonateur d'injection commun d'une distance de l'ordre de 2,5mm.

11. Multiplexeur-démultiplexeur selon l'une quelconque des revendications 7 à 9, caractérisé en ce que le filtre (F$_2$) comprend cinq résonateurs, et en ce que le résonateur (Rl) du filtre (F$_2$) qui est adjacent au résonateur commun (Ri) est un élément tubulaire qui s'étend sur une longueur de l'ordre de 25mm, a un diamètre de l'ordre de 9,6mm et est distant du résonateur d'injection commun d'une distance de l'ordre de 2,6mm et du premier résonateur central d'une distance de l'ordre de 13,4mm, et en ce que les résonateurs centraux sont séparés l'un de l'autre d'une distance de l'ordre de 17,5mm.

12. Multiplexeur-démultiplexeur selon l'une quelconque des revendications précédentes, caractérisé en ce que les deux filtres (F$_1$,F$_2$) sont intégrés dans un boîtier métallique d'une seule pièce.

EP 0 932 261 A1

# FIG.1

# FIG.2

# FIG.3

6

Office européen
des brevets

**RAPPORT DE RECHERCHE EUROPEENNE**

Numéro de la demande

EP 99 40 0113

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | US 5 241 693 A (KIM JIN D  ET AL) 31 août 1993 * colonne 2, ligne 4 – colonne 4, ligne 59; figure 1 * | 1-12 | H04B1/52 H01P1/217 |
| A | US 4 890 078 A (RADCLIFFE CHRISTOPHER J) 26 décembre 1989 * colonne 2, ligne 55 – colonne 4, ligne 3; figures 1-4 * | 1-4,7-12 | |
| A | US 4 020 429 A (BICKLEY ROBERT HENRY) 26 avril 1977 * abrégé; figures 2-7 * | 1-3,5-12 | |

**DOMAINES TECHNIQUES RECHERCHES (Int.Cl.6)**

H04B
H01P

Le présent rapport a été établi pour toutes les revendications

| Lieu de la recherche | Date d'achèvement de la recherche | Examinateur |
|---|---|---|
| LA HAYE | 1 juin 1999 | Andersen, J.G. |

**ANNEXE AU RAPPORT DE RECHERCHE EUROPEENNE
RELATIF A LA DEMANDE DE BREVET EUROPEEN NO.**     EP 99 40 0113

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

01-06-1999

| Document brevet cité au rapport de recherche | Date de publication | Membre(s) de la famille de brevet(s) | Date de publication |
|---|---|---|---|
| US 5241693 A | 31-08-1993 | CA 2025758 A,C<br>JP 2602121 B<br>JP 3147401 A | 28-04-1991<br>23-04-1997<br>24-06-1991 |
| US 4890078 A | 26-12-1989 | AUCUN | |
| US 4020429 A | 26-04-1977 | AUCUN | |

EPO FORM P0460

Pour tout renseignement concernant cette annexe : voir Journal Officiel de l'Office européen des brevets, No.12/82